# EUROPEAN PATENT SPECIFICATION

(11) **EP 1 615 097 B1**
(45) Date of publication and mention of the grant of the patent: **21.05.2008**
(21) Application number: 04255936.9
(22) Date of filing: 29.09.2004
(51) Int. Cl.: G06F 21/20, H04L 29/00

(54) **Dual-path-pre-approval authentication method**
Zweifachweg Vorgenehmigungsverfahren
Procédé d'authentification à chemin double

(30) Priority: 16.06.2004 CN 04104361
(43) Date of publication of application: 11.01.2006
(73) Proprietor: PCCW-HKT DataCom Services Limited, Hong Kong, SAR (CN)
(72) Inventor: Law, Eric Chun Wah, Tseung Kwan O, Hong Kong SAR (CN)
(74) Representative: White, Nicholas John

(56) References cited:
- WO-A-99/44114
- WO-A-02/093811
- US-A1- 2003 051 041
- US-A1- 2003 061 503

## Description

The present invention refers to an authentication method between a user and a service and/or product provider (collectively referred to as service provider) using two separate communication paths or channels. The method facilitates the user to authenticate the provider and offers an added security measure for the provider to authenticate the user.

### BACKGROUND OF THE INVENTION

Conventional authentication methods are strongly biased to the service providers, which allow the providers to validate their customers or users. However, the users are unable to tell whether they are dealing with a genuine or a fraudulent provider, and there is no easy or speedy way for the users to distinguish a genuine provider from a fraudulent one.

The purpose of user authentication is to distinguish a genuine user from unauthorized ones such that the service provider may allow the user to perform certain activities with it. What is lacking or deficient is the opposite. i.e. service provider authentication to enable the users to distinguish a genuine provider from fraudulent or fake ones.

Alternative authentication approaches, such as one-time password, personal assurance message and mobile phone short message notification, have evolved to alleviate this limitation. Such authentication means are now briefly reviewed.

### One-Time Password

The user will be given a random password that the service provider has created before the user connects to the system of the provider. The user then signs on to the provider's system using the conventional user ID and password method, with the password being the given random number or character string. This approach assures the user that he/she is using the genuine system of the provider because only the genuine system has the proprietary knowledge of such a one-time password. A fraudulent system does not have access to the specific one-time password.

It also does not make sense to capture the password using a network intercept hacking method because the one-time password is only valid for one logon or transaction.

However, the one-time password is difficult and costly to administer. The provider has to find a way to distribute the one-time password safely to the user, for example, using a secure PIN envelope or an Interactive Voice Response System (IVRS). The secure PIN envelope method is very costly to maintain. The IVRS method is less costly but it is subject to telephone network intercept hacking.

Both of these methods of distributing the one-time password create an extra usability burden to the user since one has to collect the password and correctly enter the random number or character string. The generation of the one-time password is by definition "random" and therefore correct entry thereof will be not easy. As a result, some one-time password schemes force the use of numeric digits only, whereby the level of security is compromised.

### Personal Assurance Message

This method is advocated by Visa (registered trade mark) for its "Verified by Visa" program. The personal assurance message method requires the user to pre-register a "personal assurance message" with the service provider at the account setup time. Once the user enters the credit card number, the personal assurance message will be displayed and the user may then enter a password to authorize the transaction. This method assumes only the user has the proprietary knowledge of the "personal assurance message" and only the service provider that registered the user could display the correct message.

### Mobile Phone Short Message (SMS) Notification

The SMS notification method requires the service provider to send a short message (SMS) to the user whenever a transaction is about to occur so that the user knows that he/she is dealing with the genuine system as only the genuine system has the telephone number of the user.

A further enhancement of the SMS notification method is to send a random number to the user before the approval of a transaction. The user may then enter the given random number to the transaction terminal so that the service provider can accept the transaction. This method likewise assumes that only the genuine provider knows the telephone number of the user and has the proprietary knowledge of the random number that is sent to the user.

The weakness of this method resides in the fact that there will be additional delays in system response as it takes time to transmit the short message. Furthermore, there is no guarantee that the short message may arrive safely and/or within a reasonably short time (say, a few seconds), especially if the user is at a poor mobile phone signal reception location.

Published United States patent application US2003/0061503 discloses an apparatus and method for authentication of a user, the apparatus comprising functionality associated with a cellular internet authentication portal, for: communicating via a secure link with an authenticatable device, using secure personalization associated with said authentication portal and said authenticatable device, typically a mobile telephone having a SIM, to verify that the communication is with the intended user, and associating the authentication with an activity request via a non-authenticatable device, thereby to authenticate the activity request of the non-authenticatable device.

Published International patent application WO 02/093811, discloses Interface device for interfacing between a PLMN network and a non-PLMN network, the PLMN network being configured to recognize cellular base stations as nodes thereof through which to meditate connections to cellular mobile devices, the non-PLMN networks each comprising a plurality of access points for mediating connections to network compatible mobile devices, and for which the network compatible mobile devices are not required to be cellular devices. The interface device is configured as a node of the PLMN network to appear to the PLMN network as a standard cellular base station, and comprises functionality to make non-cellular devices connecting to the non-PLMN network and attempting to access the PLMN network through the non-PLMN network appear as cellular devices to the PLMN network.

Published United States patent application US2003/0051041 discloses a converged network accessible by client terminals is provided. The converged network includes a wide area network, a local area network, and a gateway linked to the wide area and local area networks. The gateway integrates billing and authentication functions of the wide area and local area networks.

The subject invention seeks to mitigate or at least alleviate the aforesaid problems and shortcomings by providing an improved authentication method.

### SUMMARY OF THE INVENTION

According to the invention, there is provided an authentication method for use between a first party and a second party for performing a transaction, comprising the following steps:
(a) establishing a second communication path and sending by the first party of an approval code via the second communication path;
(b) receiving by the second party of the approval code;
(c) establishing a first communication path by the first party to the second party for performing authentication and then said transaction; and
(d) authenticating the first party by the second party via the first communication path using the received approval code before performing said transaction.

Preferably, the approval code includes an identification reference identifying the first party.

More preferably, the authentication method includes, before step (a), step (r) of registering the first party with the second party with registration particulars comprising the identification reference.

Further more preferably, the registration particulars include first party identifying means, and step (d) includes requiring by the second party the first party to implement the first party identifying means for authentication of the first party.

Yet further more preferably, the first party identifying means comprises a specific PIN, and step (d) comprises requiring by the second party the first party to provide the PIN for authentication.

It is preferred that the registration particulars include second party identifying means, and step (d) includes requiring by the first party the second party to implement the second party identifying means for authentication of the second party.

It is further preferred that the second party identifying means comprises a random element in the approval code in step (a), and step (d) comprises requiring by the first party the second party to provide the random element for authentication.

Preferably, step (a) includes composing by the first party a random element in the approval code for sending, and step (d) includes requiring by the first party the second party to provide the random element for authentication of the second party.

It is preferred that step (b) includes subsequently maintaining the approval code valid for a predetermined period of time, during which steps (c) and (d) should be taken.

It is preferred that step (r) includes specifying by the first party a threshold for monetary value to be involved in said transaction for skipping steps (a) to (d) if the transaction value is below the threshold.

In a preferred embodiment, the second party includes a storage system for receiving the approval code in step (b), and step (d) includes retrieving by the second party of the received approval code from the storage system for use in authenticating the first party.

More preferably, the authentication method includes, before step (a), setting up the storage system and designating the storage system by the second party for receiving the approval code in step (a).

In practice, the authentication method uses two separate communication paths, in that the first party (a user) sends an approval code to an approval code storage system acting for the second party (a service/product provider) using one communication path before conducting a transaction with the second party. The second party then retrieves the approval code from the storage system at a later time when the first party requests the transaction using the other communication path.

### BRIEF DESCRIPTION OF DRAWINGS

The invention will now be more particularly described, by way of example only, with reference to the accompanying drawing, in which:
Figure 1 is a schematic network diagram depicting a first communication path for conducting a transaction between a user using a workstation and a service provider and a second communication path for sending in advance an approval code from the user using a mobile phone to an Approval Code Storage System that is connected to the service provider, illustrating the performance of an embodiment of an authentication method in accordance with the invention;
Figure 2 is a schematic flow diagram illustrating the sending of the approval code via the first communication path of Figure 1; and
Figure 3 is a schematic flow diagram illustrating the conduction of the transaction via the second communication path of Figure 1.

### DETAILED DESCRIPTION OF PREFERRED EMBODIMENTS

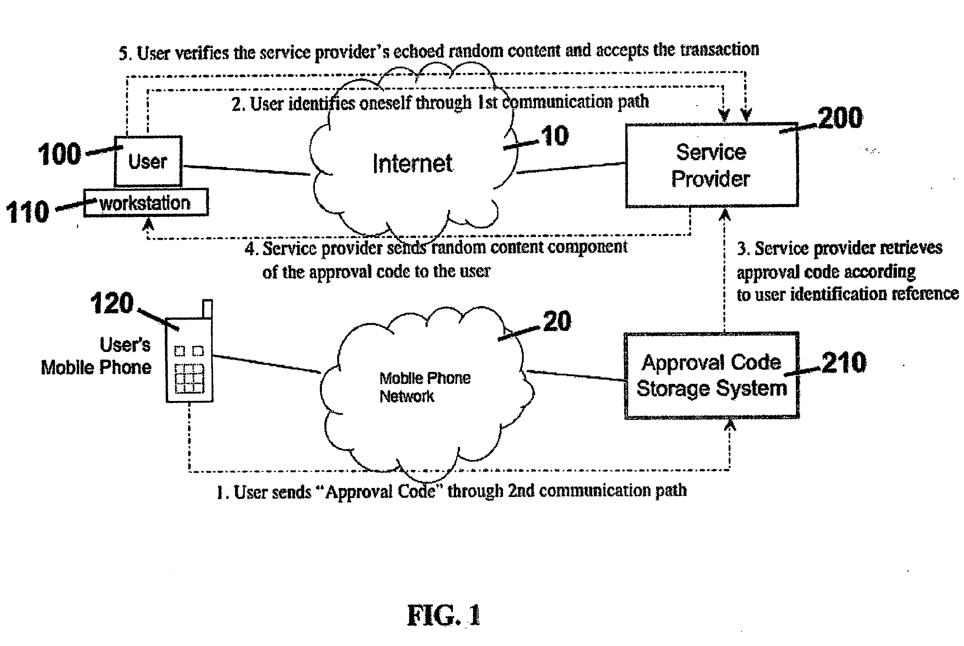

Referring initially to Figure 1 of the drawings, there is shown a general network arrangement for performing an authentication method embodying the invention, which offers an unprecedented approach in authentication between a user 100 and a service/product provider 200 (collectively referred to as service provider) using two separate communication channels or paths 10 and 20. The authentication action is particularly but not exclusively mutual as so to maximize the level of security.

To facilitate implementation and management of the subject authentication method, the operator preferably sets up a dedicated approval code storage system 210 that is accessible, for example via the Internet, by each service provider 200 who participates in the authentication scheme. The storage system 210 is designated by and acts as an agency for the providers 200 to receive or collect approval codes from users 100, as hereinafter described.

Users 100 who wish to or are required to participate in the authentication scheme should register themselves with the relevant service provider 200 before they can seek service/product therefrom or in general performing a transaction therewith. However, user registration may not be a prerequisite depending on the requirements of individual providers 200 and/or the nature of the transaction intended.

For registration, the user 100 is required to supply certain registration particulars which would include one or more user identification references for identifying him/herself, such as user ID, mobile phone number and/or e-mail address. For added security, a PIN (Personal Identification Number) should also be provided, which may be determined freely by the user 100.

The registration should also cover certain aspects that should be agreed between the two parties 100 and 200 in advance, for example the format in which the approval code is to be provided by the user 100, and whether or not a specific PIN and/or a random element is required in the approval code as identifying means for enhanced security. The user 100 may also specify a threshold for monetary value to be involved in transactions for skipping the authentication procedures if the transaction value is below the threshold. All these data and requirements are to be mapped to or associated with the account of the user 100 with the service provider 200.

The Internet is adapted as the first communication path 10 for, inter alia, conducting an online transaction between the two parties 100 and 200, with the user 100 using a workstation 110 for example and the service provider 200 represented by a online website for example.

The mobile phone network is chosen as the second communication path 20 for executing or more specifically initiating authentication, in which case the user 100 should have a mobile phone 120 in hand for communication with the storage system 210.

In operation, the user 100 initially sends an approval (pre-approval) code to the storage system 210 in advance using his/her mobile phone 120 via the telephone network 20 to prepare for an intended online transaction with the service provider 200. At a later time when the user 100 requests the transaction using the Internet 10, the provider 200 should first retrieve the approval code from the storage system 210.

According to the authentication protocol, the user 100 may embed a PIN into the approval code in a format as agreed with the service provider 200 such that the provider 200 can verify the PIN to authenticate the user 100 as an additional measure of security.

Alternatively or in addition, the user 100 may embed a random content component into the approval code in a format as agreed with the service provider 200 such that the provider 200 may echo the random content component back to the user 100 and display it on his/her workstation 110 thereby allowing the user 100 to authenticate the provider 200, since only the genuine provider 200 can have access to the approval code or random content component from the storage system 210 as originally given by the user 100.

The method facilitates the user 100 to authenticate the service provider 200 based on the echo of the value of the random content component of the approval code. It also offers an added security measure for the provider 200 to authenticate the user 100 based on the presence of the approval code retrieved with an associated user identification reference (e.g. a user ID) as one factor and optionally an embedded PIN in the approval code as the second factor.

Given that the approval code will arrive before actual commencement of the transaction, there will be no additional delay for the service provider 200 to wait for the user 100 to enter the approval code during the transaction. Furthermore, since the approval code will arrive via a separate communication path with unknown arrival time before the transaction, it is more difficult to hack both of the communication paths 10 and 20 and to collect sufficient secret information to hack the authentication mechanism.

The essence of the subject authentication method lies partly in the utilization of two communication paths 10 and 20, which are separate or distinct by nature or type inherently or by time of use or existence. The first path 10 is employed for processing a transaction between the user 100 and the service provider 200, whereas the second path 20 is used for sending the user's approval code in advance.

The first communication path 10 may be an Internet connection, a telephone connection, a leased line connection, a mobile phone connection or other means for conducting the transaction and for echoing the random content component of the approval code from the service provider 200 to the user 100 if a random content component is supported in the approval code.

The second communication path 20 is a physically or logically separate path. Similarly it can be an Internet connection, a telephone connection, a leased line connection, a mobile phone connection or other means for transmitting the user's approval code to the service provider 200 via the storage system 210 designated thereby.

The second communication path 20 is conveniently provided by the public telephone network, with the approval code being issued using a mobile phone by means of a simple telephone call or a SMS message. Mobile phones are commonplace, and a call or message therefrom inherently and invariably includes a user identifier i.e. the phone number that is sufficient to identify the caller or sender for initiating the authentication procedures.

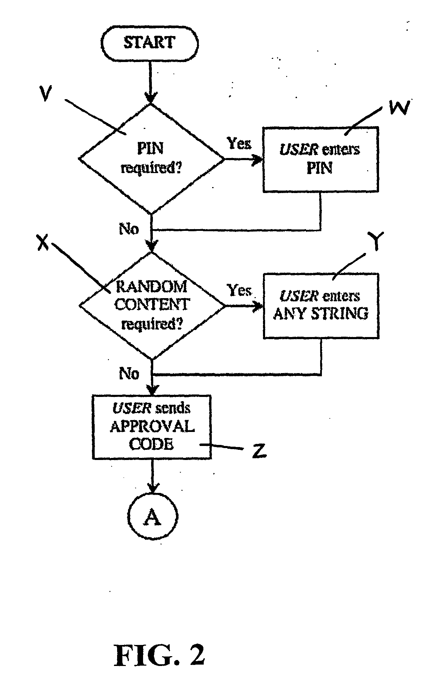

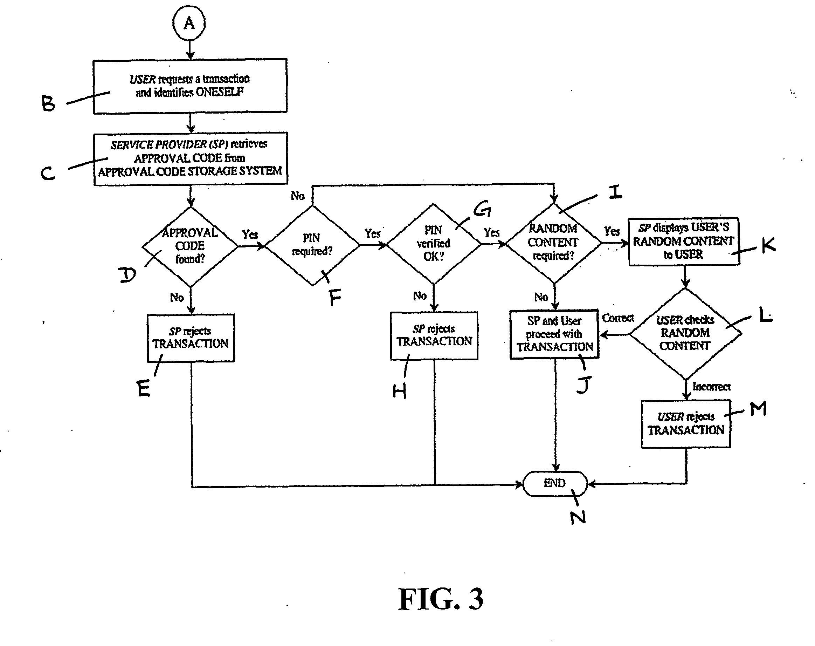

The authentication method has two phases of operation that are performed one after the other using the second and first communication paths 20 and 10 respectively, as illustrated in Figures 2 and 3 of the drawings.

By using his/her mobile phone 120 in the first phase operation, the user 100 initially composes an approval code and sends it to the storage system 210 (Box Z) via the second communication path 20, before conducting a transaction with the service provider 200 later using the first communication path 10 during the second phase operation. The transmission of the approval code needs not be in an encrypted form. The approval code may or may not have a pre-defined valid period or expiry time.

The approval code may or may not contain a PIN component (Box V) and/or a random content (any string) component (Box X), depending on the prior arrangement between the user 100 and the service provider 200. If either one or both components are required, they should be entered (Box W or Y).

The transaction may be a logon request, a site identity verification request or any other type of transaction. The second phase operation follows. At a later time, by using his/her workstation 110, the user 100 requests the transaction and identifies oneself via the first communication path 10 to the service provider 200 (Box B). The provider 200 will then retrieve the approval code from the storage system 210 according to the given or pre-registered user identification reference (Box C). If the approval code is not found (Box D), the provider 200 will reject the transaction (Box E).

If the approval code is found (Box D) and the service provider 200 does not require a PIN in the approval code (Box F), the provider 200 will consider that the approval code as a valid one and proceed to check for a random content component (Box I). On the other hand, if the provider 200 requires a PIN in the approval code (Box F), the provider 200 will verify the embedded PIN (Box G). If PIN verification fails, the provider 200 will reject the transaction (Box H).

In the case that a random content component is not required, the user 100 and the service provider 200 may proceed with the transaction (Box J). If the approval code includes a random content component (Box I), the service provider 200 will then return and display the value of that component on the user's workstation 110 (Box K). The user 100 then checks the displayed value (Box L) and may, if appropriate, proceed with the transaction with the provider 200 (Box J). The user 100 has the option to reject the transaction (Box M) if the displayed value does not match with what he/she has provided to the approval code storage system 210 at the outset. Upon rejection or completion of the transaction, the operation ends (Box N).

The subject authentication method assumes that only the user 100 has the proprietary knowledge of the specific approval code that he/she has constructed and sent to the service provider 200 before conducting the transaction. The method also assumes that the provider 200 can retrieve the user transmitted approval code from the storage system 210 according to the unique user identification reference known to the provider 200, in that the user identification reference is given by the user 100 at the time of transaction or during initial user registration with the provider 200.

If the user 100 has presented a PIN in the approval code, the method further assumes that the service provider 200 will verify the PIN and ignore the approval code should the PIN verification fail. If the user 100 has presented a random content component in the approval code, the method further assumes that the provider 200 will display the value of the random content component for the user 100 to check before proceeding with the transaction.

The approval code storage system 210 does not need to know the format of the approval code, which is agreed between the user 100 and the service provider 200.

Several scenarios are described below to illustrate practical implementation of the subject authentication method.

### Scenario 1 - Logon Request

This is a situation where a service provider 200 allows a registered user 100 to verify the authenticity of the provider 200 before the user 100 submits a password to request logon.

Before making a logon request with the service provider 200 using the Internet, the user 100 enters an approval code and sends it to the approval code storage system 210 designated by the provider 200 using his/her mobile phone 120 and the short message system (SMS). The approval code contains a random content component chosen by the user 100, who however has not requested the use of a PIN in the approval code with the provider 200.

The approval code received by the storage system 210 will only be maintained valid for, say, fifteen minutes to avoid unnecessary exposure. During this period, the user 100 should carry out a logon request to the website of the service provider 200, establishes a web session with the provider 200 and enters his/her user ID in the dialogue box of the established web session. The provider 200 then retrieves the approval code from the storage system 210 according to the pre-registered mobile phone number (i.e. user identification reference) mapped to the user ID.

The integrity of the established web session between the user 100 and the service provider 200 is preferably protected by end-to-end encryption between the user 100 and the web server, for example using the Secure Socket Layer (SSL) protocol.

If the approval code is not found, the service provider 200 will abort the logon request and close the web session with the user 100. If the approval code is found, the provider 200 will consider it as a valid one. The provider 200 will then extract the random content component from the approval code and display it onto the web session for viewing by the user 100 and request the user 100 to enter the password to complete the logon request.

The user 100 has the option to cancel the logon request if the echoed random content component of the approval code does not match with what the user 100 has provided earlier to the storage system 210. If the echoed component is correct, the user 100 may consider the online site of the provider 200 as genuine and then enter the password so that the provider 200 can proceed to perform the normal "user ID and password" verification process.

### Scenario 2 - Site Identity Verification Request

This is a situation where a service provider 200 allows any non-registered user 100 to verify the authenticity of its own online site.

Prior to conducting a site identity verification request with the service provider 200 using the Internet, the user 100 enters an approval code and sends it to the approval code storage system 210 designated by the provider 200 using his/her mobile phone 120 and the short message system (SMS). The approval code contains a random content component given by the user 100. The user 100 does not request the use of PIN in the approval code with the provider 200.

The approval code at the storage system 210 will be valid for fifteen minutes. While the code is valid, the user 100 carries out a site identity verification request to the website of the service provider 200, establishes a web session with the provider 200 and enters his/her mobile phone number in the dialogue box of the established web session. The provider 200 then retrieves the approval code from the storage system 210 according to the given mobile phone number.

The integrity of the established web session between the user 100 and the service provider 200 is preferably protected by end-to-end encryption between the user 100 and the web server, such as the Secure Socket Layer (SSL) protocol.

If the approval code is not found, the service provider 200 will abort the site identity verification request and close the web session with the user 100. If the approval code is found, the provider 200 will consider it valid and then extract the random content component from the approval code and display it onto the web session for viewing by the user 100.

The user 100 has the option to close the web session if the echoed random content component of the approval code does not match with what he/she has provided earlier to the storage system 210, otherwise the user 100 may consider the provider's online site as genuine and proceed to browse it.

### Scenario 3 - Credit Card Fraud Protection

For a credit card employing the subject authentication method, it is temporarily suspended from service until the user 100 sends an approval code before conducting a credit card transaction.

Some implementations may skip the authentication method for low monetary value credit card transactions, as is deemed unnecessary on balance. In this case, the credit card is usable for such low value transactions but it will be suspended from transactions of monetary value higher than a threshold value specified by the user 100, for example during the initial user registration procedures, until the user 100 sends the approval code in advance.

The credit card authorization network, typically using dial up lines and/or leased circuits, is taken as the first communication path 10 for conducting transactions. The mobile phone network is considered as the second communication path 20 for transmitting the approval code.

Before conducting a credit card transaction, the user 100 enters an approval code and sends it to the storage system 210 designated by the credit card issuing bank using his/her mobile phone and the short message system (SMS). The approval code contains a PIN given by the user 100.

The approval code at the storage system 210 will expire in fifteen minutes. Before the expiry, the user 100 should carry out a credit card transaction with either a physical sales point or an online sales channel. Upon receiving the credit card transaction authorization request, the bank will retrieve the approval code from the storage system 210 according to the pre-registered mobile phone number mapped to the credit card number of the cardholder.

If the approval code is not found, the bank will reject the credit card transaction. If the approval code is found, the bank will verify the embedded PIN in the approval code. Upon successful PIN verification, the bank will perform the credit card transaction authorization process otherwise it will reject the transaction.

### Scenario 4 - ATM Card Fraud Protection

For an Automatic Teller Machine (ATM) card that uses the subject authentication method, it is temporarily suspended from service until the user 100 sends an approval code before conducting the ATM card transaction.

Some implementations may skip authentication for low monetary value ATM card transactions for convenience. In this case, the ATM card is usable for low value transactions but suspended from transactions with monetary value higher than a pre-defined threshold value until the user 100 sends the approval code in advance.

The ATM card authorization network, which is typically a private network, is the first communication path 10 for conducting the transaction. The mobile phone network is the second communication path 20 for collecting the approval code.

Prior to an ATM card transaction, the user 100 enters an approval code and sends it to the storage system 210 designated by the ATM card issuing bank using his/her mobile phone and the short message system (SMS). The approval code contains a PIN given by the user 100. This approval code PIN is unrelated to or distinct from the ATM PIN.

The approval code at the storage system 210 will expire in fifteen minutes. Before the expiry, the user 100 should carry out an ATM card transaction by inserting the ATM card into an ATM machine and entering the ATM PIN. Upon receiving the ATM card transaction authorization request, the bank will retrieve the approval code from the storage system 210 according to the pre-registered mobile phone number mapped to the ATM card number of the cardholder.

If the approval code is not found, the bank will reject the ATM card transaction, otherwise the bank will verify the embedded PIN in the approval code. Upon successful PIN verification, the bank will perform the ATM card transaction authorization process otherwise the bank will reject it.

The invention has been given by way of example only, and various other modifications and/or variations to the described embodiments may be made by persons skilled in the art without departing from the scope of the invention as specified in the accompanying claims.

## Claims

1. An authentication method for use between a first party (100) and a second party (200) for performing an online transaction between the two parties, comprising the following steps:
a) establishing a second communication path (20) and sending by the first party (100) of an approval code via the second communication path (20);
b) receiving by the second party (200) of the approval code;
c) establishing a first communication path (10) by the first party (100) to the second party (200) for performing authentication and then said transaction; and
d) authenticating the first party (100) by the second party (200) via the first communication path (10) using the received approval code before performing said online transaction between the two parties,
**characterized in that**:
step a) includes composing by the first party 100) a random element in the approval code for sending, and
step d) includes requiring by the first party (100) the second party (200) to provide the random element for authentication of the second party.

2. The authentication method as claimed in claim 1, **characterized in that** the approval code includes an identification reference identifying the first party.

3. The authentication method as claimed in claim 2, **characterized in that** the method includes, before step a), step r) of registering the first party with the second party with registration particulars comprising the identification reference.

4. The authentication method as claimed in claim 3, **characterized in that** the registration particulars include first party identifying means, and step d) includes requiring by the second party the first party to implement the first party identifying means for authentication of the first party.

5. The authentication method as claimed in claim 4, **characterized in that** the first party identifying means comprises a specific PIN, and step d) comprises requiring by the second party the first party to provide the PIN for authentication.

6. The authentication method as claimed in claim 3, **characterized in that** the registration particulars include second party identifying means, and step d) includes requiring by the first party the second party to implement the second party identifying means for authentication of the second party.

7. The authentication method as claimed in claim 1, **characterized in that** the second party identifying means comprises a random element in the approval code in step a), and step d) comprises requiring by the first party the second party to provide the random element for authentication.

8. The authentication method as claimed in claim 1, **characterized in that** step b) includes subsequently maintaining the approval code valid for a predetermined period of time, during which steps c) and d) should be taken.

9. The authentication method as claimed in claim 1, **characterized in that** step r) includes specifying by the first party a threshold for monetary value to be involved in said transaction for skipping steps a) to d) if the transaction value is below the threshold.

10. The authentication method as claimed in claim 1, **characterized in that** the second party includes a storage system for receiving the approval code in step b), and step d) includes retrieving by the second party of the received approval code from the storage system for use in authenticating the first party.

11. The authentication method as claimed in claim 10, **characterized in that** the method includes, before step a), setting up the storage system and designating the storage system by the second party for receiving the approval code in step a).

## Patentansprüche

1. Authentifikationsverfahren zur Verwendung zwischen einem ersten Teilnehmer (100) und einem zweiten Teilnehmer (200) zur Durchführung einer Online-Transaktion zwischen den beiden Teilnehmern, die folgenden Schritte umfassend:
a) Einrichten eines zweiten Kommunikationsweges (20) und Senden eines Zulassungscodes durch den ersten Teilnehmer (100) über den zweiten Kommunikationsweg (20);
b) Empfangen des Zulassungscodes durch den zweiten Teilnehmer (200);
c) Einrichten eines ersten Kommunikationsweges (10) durch den ersten Teilnehmer (100) zum zweiten Teilnehmer (200) zur Durchführung einer Authentifikation und dann der Transaktion; und
d) Authentifizieren des ersten Teilnehmers (100) durch den zweiten Teilnehmer (200) über den ersten Kommunikationsweg (10) unter Verwendung des empfangenen Zulassungscodes vor Durchführung der Online-Transaktion zwischen den beiden Teilnehmern, **dadurch gekennzeichnet, daß**:
Schritt a) aufweist: Zusammensetzen eines Zufallselements durch den ersten Teilnehmer (100) im Zulassungscode zum Senden, und
Schritt b) aufweist: Fordern durch den ersten Teilnehmer (100), daß der zweite Teilnehmer (200) das Zufallselement zur Authentifikation des zweiten Teilnehmers bereitstellt.

2. Authentifikationsverfahren nach Anspruch 1, **dadurch gekennzeichnet, daß** der Zulassungscode einen Identifikationsbezug umfasst, der den ersten Teilnehmer identifiziert.

3. Authentifikationsverfahren nach Anspruch 2, **dadurch gekennzeichnet, daß** das Verfahren vor Schritt a) den folgenden Schritt r) umfasst: Registrieren des ersten Teilnehmers beim zweiten Teilnehmer mit Registrierungsangaben, die den Identifikationsbezug umfassen.

4. Authentifikationsverfahren nach Anspruch 3, **dadurch gekennzeichnet, daß** die Registrierungsangaben ein Erstteilnehmeridentifikationsmittel umfassen und Schritt d) folgendes umfasst: Fordern durch den zweiten Teilnehmer, daß der erste Teilnehmer das Erstteilnehmeridentifikationsmittel zur Authentifikation des ersten Teilnehmers implementiert.

5. Authentifikationsverfahren nach Anspruch 4, **dadurch gekennzeichnet, daß** das Erstteilnehmeridentifikationsmittel eine spezifische PIN umfaßt und Schritt d) folgendes umfaßt: Fordern durch den zweiten Teilnehmer, daß der erste Teilnehmer die PIN zur Authentifikation bereitstellt.

6. Authentifikationsverfahren nach Anspruch 3, **dadurch gekennzeichnet, daß** die Registrierungsangaben ein Zweitteilnehmeridentifikationsmittel umfassen und Schritt d) folgendes umfasst: Fordern durch den ersten Teilnehmer, daß der zweite Teilnehmer das Zweitteilnehmeridentifikationsmittel zur Authentifikation des zweiten Teilnehmers implementiert.

7. Authentifikationsverfahren nach Anspruch 1, **dadurch gekennzeichnet, daß** das Zweitteilnehmeridentifikationsmittel ein Zufallselement im Zulassungscode in Schritt a) umfaßt und Schritt d) folgendes umfaßt: Fordern durch den ersten Teilnehmer, daß der zweite Teilnehmer das Zufallselement zur Authentifikation bereitstellt.

8. Authentifikationsverfahren nach Anspruch 1, **dadurch gekennzeichnet, daß** Schritt b) folgendes umfasst: anschließendes Gültiglassen des Zulassungscodes für eine vorbestimmte Zeitdauer, während der die Schritte c) und d) durchgeführt werden sollten.

9. Authentifikationsverfahren nach Anspruch 1, **dadurch gekennzeichnet, daß** Schritt r) folgendes umfasst: Spezifizieren eines Schwellwertes für einen mit der Transaktion verbundenen Geldwert durch den ersten Teilnehmer für ein Überspringen der Schritte a) bis d), wenn der Transaktionswert unter dem Schwellwert ist.

10. Authentifikationsverfahren nach Anspruch 1, **dadurch gekennzeichnet, daß** der zweite Teilnehmer ein Speichersystem zum Aufnehmen des Zulassungscodes in Schritt b) umfasst und Schritt d) folgendes umfasst: Abrufen des empfangenen Zulassungscodes durch den zweiten Teilnehmer aus dem Speichersystem zur Verwendung bei der Authentifikation des ersten Teilnehmers.

11. Authentifikationsverfahren nach Anspruch 10, **dadurch gekennzeichnet, daß** das Verfahren folgendes umfasst: vor Schritt a) erfolgendes Aufbauen des Speichersystems und Bestimmen des Speichersystems durch den zweiten Teilnehmer zum Aufnehmen des Zulassungscodes in Schritt a).

## Revendications

1. Procédé d'authentification destiné à être utilisé entre une première partie utilisatrice (100) et une seconde partie utilisatrice (200) pour exécuter une transaction en ligne entre les deux parties utilisatrices, comprenant les étapes ci-dessous consistant à :
a) établir un second trajet de communication (20) et transmettre, au moyen de la première partie utilisatrice (100), un code d'approbation via le second trajet de communication (20) ;
b) recevoir, au moyen de la seconde partie utilisatrice (200), le code d'approbation ;
c) établir un premier trajet de communication (10), au moyen de la première partie utilisatrice (100), à la seconde partie utilisatrice (200) pour exécuter une authentification et ensuite ladite transaction ; et
d) authentifier la première partie utilisatrice (100) au moyen de la seconde partie utilisatrice (200) via le premier trajet de communication (10) en utilisant le code d'approbation reçu avant d'exécuter ladite transaction en ligne entre les deux parties utilisatrices, **caractérisé en ce que** :
l'étape a) inclut l'étape consistant à composer, au moyen de la première partie utilisatrice (100), un élément aléatoire dans le code d'approbation destiné à être transmis, et
l'étape b) inclut l'étape consistant à demander, au moyen de la première partie utilisatrice (100), à la seconde partie utilisatrice (200) de fournir l'élément aléatoire pour une authentification de la seconde partie utilisatrice.

2. Procédé d'authentification selon la revendication 1, **caractérisé en ce que** le code d'approbation inclut une référence d'identification identifiant la première partie utilisatrice.

3. Procédé d'authentification selon la revendication 2, **caractérisé en ce que** le procédé inclut, avant l'étape a), l'étape r) consistant à enregistrer la première partie utilisatrice avec la seconde partie utilisatrice avec des détails d'enregistrement comprenant la référence d'identification.

4. Procédé d'authentification selon la revendication 3, **caractérisé en ce que** les détails d'enregistrement inclut un moyen d'identification de la première partie utilisatrice, et l'étape d) inclut l'étape consistant à demander, au moyen de la seconde partie utilisatrice, à la première partie utilisatrice de mettre en oeuvre le moyen d'identification de la première partie utilisatrice pour l'authentification de la première partie utilisatrice.

5. Procédé d'authentification selon la revendication 4, **caractérisé en ce que** le moyen d'identification de la première partie utilisatrice comprend un code PIN spécifique, et l'étape d) comprend l'étape consistant à demander, au moyen de la seconde partie utilisatrice, à la première partie utilisatrice de fournir le code PIN pour une authentification.

6. Procédé d'authentification selon la revendication 3, **caractérisé en ce que** les détails d'enregistrement inclut un moyen d'identification de la seconde partie utilisatrice, et l'étape d) inclut l'étape consistant à demander, au moyen de la première partie utilisatrice, à la seconde partie utilisatrice de mettre en oeuvre le moyen d'identification de la seconde partie utilisatrice pour l'authentification de la seconde partie utilisatrice.

7. Procédé d'authentification selon la revendication 1, **caractérisé en ce que** le moyen d'identification de la seconde partie utilisatrice comprend un élément aléatoire dans le code d'approbation à l'étape a), et l'étape d) comprend l'étape consistant à demander, au moyen de la première partie utilisatrice, à la seconde partie utilisatrice de fournir l'élément aléatoire pour une authentification.

8. Procédé d'authentification selon la revendication 1, **caractérisé en ce que** l'étape b) inclut l'étape consistant à subséquemment conserver le code d'approbation valide pour une période de temps prédéterminée, au cours de laquelle les étapes c) et d) devraient être mises en oeuvre.

9. Procédé d'authentification selon la revendication 1, **caractérisé en ce que** l'étape r) inclut l'étape consistant à spécifier, au moyen de la première partie utilisatrice, un seuil pour une valeur monétaire impliquée dans ladite transaction pour éviter les étapes a) à d) lorsque la valeur de la transaction est inférieure au seuil.

10. Procédé d'authentification selon la revendication 1, **caractérisé en ce que** la seconde partie utilisatrice inclut un système de stockage pour recevoir le code d'approbation à l'étape b), et l'étape d) inclut l'étape consistant à récupérer, au moyen de la seconde partie utilisatrice, le code d'approbation reçu à partir du système de stockage pour l'utiliser dans l'authentification de la première partie utilisatrice.

11. Procédé d'authentification selon la revendication 10, **caractérisé en ce que** le procédé inclut, avant l'étape a), l'étape consistant à configurer le système de stockage et à désigner le système de stockage, au moyen de la seconde partie utilisatrice, pour recevoir le code d'approbation à l'étape a).
